Europäisches Patentamt

European Patent Office

Office européen des brevets

(19)

(11) Veröffentlichungsnummer: **0 104 635**
**A2**

(12) # EUROPÄISCHE PATENTANMELDUNG

(21) Anmeldenummer: 83109564.1

(22) Anmeldetag: 26.09.83

(51) Int. Cl.³: **G 06 F 11/26**

(30) Priorität: 29.09.82 US 428036

(43) Veröffentlichungstag der Anmeldung:
04.04.84 Patentblatt 84/14

(84) Benannte Vertragsstaaten:
AT DE FR GB IT

(71) Anmelder: SIEMENS AKTIENGESELLSCHAFT
Berlin und München Wittelsbacherplatz 2
D-8000 München 2(DE)

(72) Erfinder: Daniels, Stuart F.
103 Ramblewood Rd.
Moorestown, N.J. 08057(US)

(54) Verfahren und Anordnung zum Prüfen eines digitalen Rechners.

(57) Ein Verfahren und eine Anordnung werden beschrieben zum Prüfen eines digitalen Rechners, der einen Prozessor zur Ausführung von Befehlen und einen Speicher zum Speichern der vom Prozessor auszuführenden Befehlen aufweist. Der Prozessor erzeugt Steuersignale an Steuersignalausgängen (26), wenn ein Befehl geholt wird und/oder ausgeführt wird. Die Prüfanordnung enthält eine Steuereinheit (28), die feststellt, wenn ein Operationscode eines vom Prozessor auszuführenden Befehls vom Speicher geholt wird. Sie enthält weiterhin ein linear rückgekoppeltes Schieberegister (22), um eine erste Signatur in Abhängigkeit der aufeinanderfolgenden Zustände der Steuersignale zu erzeugen. Dabei entspricht eine bestimmte erste Signatur einem bestimmten Satz von Steuersignalen. Die Prüfanordnung weist zusätzlich einen kombinatorischen Schaltkreis (40) z.B. einen ROM auf, der in Abhängigkeit des Operationscode des vom Prozessor auszuführenden Befehls eine zweite Signatur erzeugt, wobei die zweite Signatur derjenigen ersten Signatur entspricht, die bei fehlerfreier Arbeitsweise des Prozessors vom Schieberegister 22 erzeugt wird. Schließlich ist noch ein Komparator (48) vorgesehen, der die erste und zweite Signatur miteinander vergleicht und ein Fehlersignal am Ausgang abgibt, wenn die beiden Signaturen ungleich sind.

FIG. 2

SIEMENS AKTIENGESELLSCHAFT
Berlin und München

Unser Zeichen
VPA 82 P 7428 E

**Verfahren und Anordnung zum Prüfen eines digitalen Rechners**

Die Erfindung bezieht sich auf ein Verfahren und eine Anordnung zur Prüfung eines digitalen Rechners, der einen Prozessor zur Ausführung von Befehlen und einen mit dem Prozessor verbundenen Speicher zur Speicherung der vom Prozessor auszuführenden Befehle aufweist, bei dem die Befehle aus einem vorgegebenen Satz von Befehlen ausgewählt werden und jeder Befehl einen bestimmten Operationscode aufweist, und bei dem der Prozessor auf Steuersignalausgängen Steuersignale beim Holen und/oder Ausführen jedes Befehles abgibt.

Digitale Rechner, die mit integrierten Schaltkreisen realisiert werden, können auf zweierlei Art geprüft werden:
1. Off-line oder nichtparalleles Prüfen, das zu Beginn oder periodisch durchgeführt wird. Bei diesem Testverfahren muß der Prozessor aus den Rechnerbetrieb herausgelöst werden und dann umfassend geprüft werden; anschließend kann er wieder in den Rechnerbetrieb eingefügt werden.
2. On-line oder paralleles Testen; bei diesem Verfahren wird der Prozessor im Rechnerbetrieb überprüft.

Die Zeit zur Prüfung einer Schaltung im Off-line oder nicht parallelen Verfahren steigt mit der Anzahl der Gatter G innerhalb der Schaltung. Die Testzeit wird empirisch als proportional zu $G^x$ angegeben, wobei x von der logischen Struktur abhängt und zwischen 1 und 2 liegt. Weiterhin bei gegebenen konstanten Prozentsatz der Fehlererfassung steigt die Zahl der ungetesteten Zellen linear mit G. Zum Beispiel läßt ein 99% Test einer 1000 Zellen umfassenden Schaltung 10 Zellen ungeprüft, während ein 99% Test einer 50.000 Zellen Schaltung z.B. eines 16 Bit Mikroprozessors, 500

Il 1 The - 21. Juni 1983

Zellen ungeprüft läßt und zwischen 50 und 2500 mal so viel Zeit in Anspruch nimmt. Zusätzlich steigt die Wahrscheinlichkeit von sporadischen Fehlern innerhalb der Schaltung mit ansteigender Zellendichte.

Zum jetzigen Zeitpunkt stellt die sog. 8 bit Generation der Mikroprozessoren eine ausgereifte Technologie dar, die in vielen Produkten seit einigen Jahren verwendet wird. Bekannte Produkte werden nun mit Hilfe von 16 bit Mikroprozessoren entwickelt. Der Generation jenseits der 16 bit Prozessoren ist mit der kürzlichen Entwicklung von 32 bit integrierten Schaltkreisen im Entstehen begriffen.

Die Unterschiede zwischen 8, 16 und 32 bit Mikroprozessoren gehen sehr viel tiefer als ein Vergleich der Breite ihrer Datenbusse angibt. Es ist der Grad der Integration der Funktionen und der Verarbeitungsfähigkeiten, die in der Schaltung enthalten sind, zusammen mit der Anzahl, der Größe und der Dichte der internen logischen Zellen, die die wirkliche Basis eines Vergleichs darstellen.

Beim Fortschreiten von der 8 bit Technologie über die 16 bit Technologie zur 32 bit Technologie wird das on-line Prüfen immer wünschenswerter und es wird immer weniger wünschenswert, off-line oder periodisch geplante Tests dieser Schaltungen auszuführen. Der Grund ist darin zu sehen, daß off-line Prüfverfahren zu lange dauern und zu viel Prozessorzeit beanspruchen. Außerdem ist nicht auszuschließen, daß nach einem off-line Test des Prozessors noch sporadische Fehler auftreten, wenn der Prozessor wieder in den Rechnerbetrieb eingefügt wird. Umgekehrt kann ein sporadischer Fehler während des off-line Prüfens entstehen, der angeben würde, daß eine fehlerfreie Schaltung
schlecht ist.

Die klassische Lösung für das on-line Prüfen ist das Vorsehen von redundanten Systemen, bei dem die Ergebnisse
von zwei oder mehr Prozessoren oder Prozessorgruppen oder
Untersystemen miteinander verglichen werden. Da aber die
Schaltkreishersteller den Zusatzaufwand an Siliziumfläche
über 10 bis 15% hinaus für Fehlertoleranz und Prüfzwecke
nicht rechtfertigen können, kann die Mehrheitsredundanz
nur bei kritischen Anwendungen gerechtfertigt werden.

Es ist darum wünschenswert ein Verfahren und eine Anordnung anzugeben, das die ein vernünftiges Maß von on-line
Prüfung gekoppelt mit einer umfassenden off-line Prüfeigenschaft für das Herstell-/und Feldprüfen ermöglicht. Die Anordnung sollte dabei höchstens aus einem oder zwei verhältnismäßig billigen integrierten Schaltkreisen bestehen. Die
Schnittstelle zu dem Mikroprozessor soll möglichst einfach
ausgeführt sein, die Leistung des Systems soll möglichst
wenig beeinflußt werden und der Entwickler und Programmierer soll durch das Vorhandensein der Anordnung möglichst
wenig belastet werden. Zusammengefaßt sollte eine wünschenswerte Lösung aus einem oder zwei billigen Chips bestehen,
die direkt an den Mikroprozessor angeschlossen werden können, um diesen in einer möglichst systemtransparenten Art
prüfen zu können.

Anordnungen, mit denen ein on-line Prüfen von Mikroprozessoren möglich ist, sind bekannt. Diese bekannten Systeme
sind aber nicht fähig, den sog. Kern des zu prüfenden Rechners zu testen. Dieser Kern ist der Teil des Rechners, der
fehlerfrei sein muß, um die Selbstüberprüfung des Rechners
zu ermöglichen. Dieser Testkern umfaßt nicht nur den Mikroprozessor selbst, sondern auch einen Festspeicher (ROM), der das Selbstprüfprogramm enthält und weiterhin Adressen- und Steuerbusse, Bustreiber und Multiplexer. Fehler innerhalb des Kerns führen zu einem fehlerhaften und unvorhersagbaren Systemverhalten und machen die Selbstüberprüfung nutzlos. In einem vollständigen System sind derartige Kernfehler sehr gefährlich, weil sie den Mikroprozessor dazu veranlassen, eine Folge von Schritten durchzuführen, die sich vollkommen von denen unterscheiden, die von seinem Programm angegeben sind. Deshalb können diese Fehler zu solch gefährlichen Situationen wie der Zerstörung von wertvollen Speicherdateien, der Verfälschung von gesicherten Daten bei Kommunikationssystemen usw. führen.

Die der Erfindung zugrundeliegende Aufgabe besteht darin, ein Verfahren und eine Anordnung zur Prüfung des sog. Testkerns eines Rechners anzugeben. Dabei soll weiterhin ein on-line oder Parallelprüfen des Rechners möglich sein. Dabei soll die Anordnung in einem einzigen Chip integriert sein, der direkt an den Rechner in einer vollkommen systemtransparenten Art angeschlossen wird.

Diese Aufgabe wird bei einem Verfahren der eingangs angegebenen Art dadurch gelöst, daß festgestellt wird, wenn ein Operationscode für einen von dem Prozessor auszuführenden Befehl vom Speicher geholt wird, daß die Steuersignale überprüft werden, die an den Steuersignalausgängen des Prozessors abgegeben werden, während jeder Befehl geholt und/ oder ausgeführt wird, daß eine erste Signatur in Abhängigkeit dieser Steuersignale erzeugt wird, wobei jedem Satz von Steuersignalen eine bestimmte erste Signatur entspricht, daß der Operationscode des vom Prozessor auszuführenden Befehls übernommen wird, um eine zweite Signatur zu erzeugen, die der ersten Signatur bei richtiger Arbeitsweise des Prozessors entsprechen würde, und daß die erste und zweite Signatur miteinander verglichen wird und ein Ausgangssignal erzeugt wird, das einen Fehler angibt, wenn die beiden Signaturen ungleich sind.

Die Aufgabe wird durch eine Anordnung der eingangs angegebenen Art dadurch gelöst, daß eine Steuereinheit vorgesehen ist, die feststellt, wenn ein Operationscode eines vom Prozessor auszuführenden Befehls vom Speicher geholt wird oder zu holen ist, daß eine erste Schaltung vorgesehen ist, die mit den Steuersignalausgängen verbunden ist und gesteuert von der Steuereinheit eine erste Signatur in Abhängigkeit der Steuersignale erzeugt, wobei eine bestimmte erste Signatur jedem bestimmten Satz von Steuersignalen entspricht, daß eine zweite Schaltung vorgesehen ist, die mit dem Speicher verbunden ist und gesteuert von der Steuereinheit eine zweite Signatur in Abhängigkeit des Operationscodes des vom Prozessor auszuführenden Befehls erzeugt, wobei die zweite Signatur derjenigen ersten Signatur entspricht, die bei fehlerfreier Arbeitsweise des Prozessors erzeugt wird, und daß eine dritte Schaltung vorgesehen ist, die mit der ersten und der zweiten Schaltung verbunden ist, um die die erste und zweite Signatur miteinander zu vergleichen und um ein Ausgangssignal zu erzeugen, das einen Fehler anzeigt, wenn die beiden Signaturen ungleich sind.

Die erste Schaltung kann aus einem linear rückgekoppelten Schieberegister bestehen, das parallel geladen wird. Eine solche Schaltung erzeugt eine Signatur, die abhängig ist von der genauen Reihenfolge, in der es die Information erhält. Diese Schaltung besteht aus einem Block mit einer Mehrheit von Eingängen zum Empfang der vom Mikroprozessor abgegebenen Steuersignale und mit einer Mehrheit von Ausgängen zur Erzeugung der Signatur. Der Block hat weiterhin einen Rücksetz- und Takteingang, um das Register zurückzusetzen und um die Steuersignale in das Register einzugeben. Ein geeigneter Schaltkreis für diesen Zweck ist in der

-6-

US-Patentschrift 4 340 857 beschrieben.

Andere Weiterbildungen der Erfindung ergeben sich aus den Unteransprüchen.

Anhand eines Ausführungsbeispiels, das in den Figuren dargestellt ist, wird die Erfindung weiter erläutert. Es zeigen

Figur 1 ein Blockschaltbild, das zeigt, wie die Anordnung mit dem digitalen Rechner verbunden ist,

Figur 2 ein Blockschaltbild der Anordnung,

Figur 3 ein ausführlicheres Blockschaltbild der Anordnung nach Figur 2,

Figur 4 ein Schaltbild des linear rückgekoppelten Schieberegisters (LRS), das in der Anordnung nach den Figuren 2 und 3 verwendet wird,

Figur 5 ein Zeitdiagramm, das die Arbeitsweise der Anordnung nach Figur 2 und 3 angibt,

Figur 6 ein ausführliches Schaltbild der Anordnung gemäß Figur 2 und Figur 3.

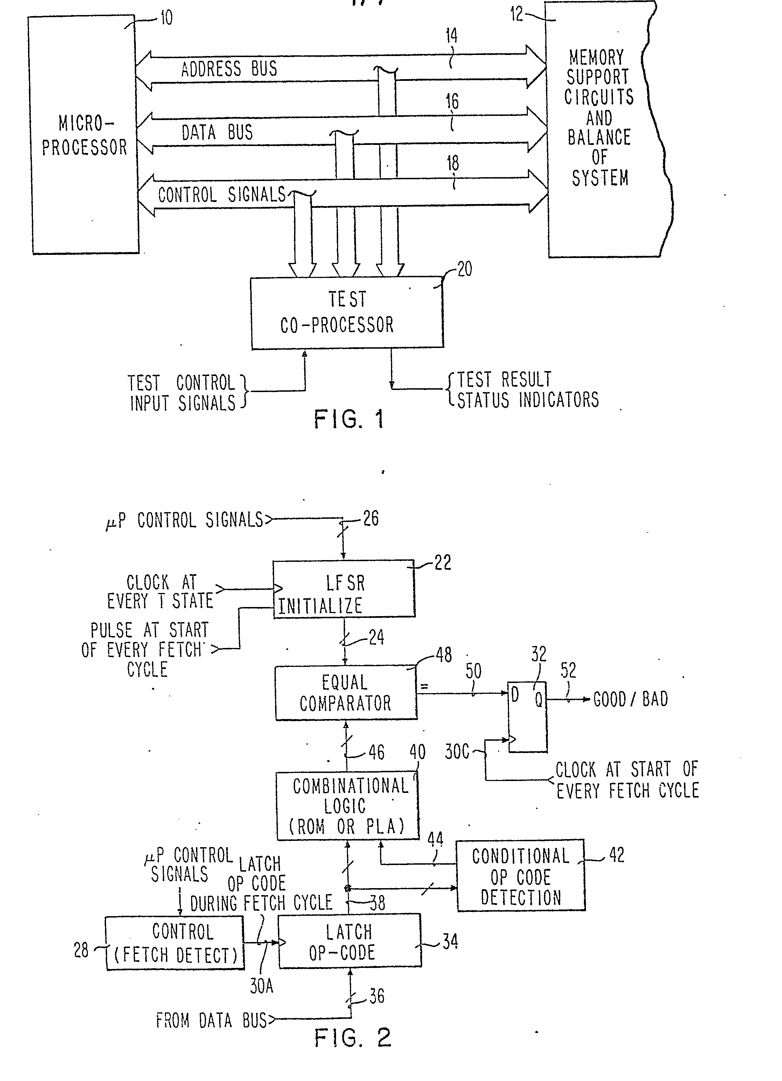

Figur 1 zeigt einen Rechner mit einem Mikroprozessor 10, der mit einem Speicher und Ansteuerschaltkreisen 12 über Adressen-, Daten und Steuerbusse 14, 16 und 18 verbunden ist. Ein sog. Prüfprozessor 20 ist mit dem Adreß-, Daten- und Steuerbus 14, 16 und 18 verbunden, um die Adressensignale, die Datensignale und die Steuersignale zu empfangen. Dem Prüfprozessor 20 werden weiterhin Teststeuereingangssignale TCS zugeführt, aufgrund denen er bestimmte Funktionen ausführt. Er erzeugt Testergebnisindikatoren TRS, die seinen Status und die Ergebnisse seiner Operation angeben. Die Erzeugung der Teststeuereingangssignale TCS bzw. die Ergebnisindikatoren TRS hängen von der Anwendung ab. Für die Erläuterung der Erfindung können sie mit Hilfe von Kippschaltern, Tasten bzw. LEDs in der einfachsten Ausführung erzeugt werden.

Der Prüfprozessor 20 führt on-line Prüfungen mit dem Prozessor 10 durch. Er bestimmt, ob der Mikroprozessor fehlerfrei funktioniert und entfernt den Selbsttestkern eines einen Mikroprozessor enthaltenden Produkts vom Prozessor selbst. Die Prüfprozessorarchitektur ist vorzugsweise einfach selbsttestfähig und fehlersicher, so daß eine hohe Sicherheit der Testergebnisse erreichbar ist.

Der Prüfprozessor 20 kann eine Anzahl von Testfunktionen ausführen, um die Unversehrtheit des Mikroprozessors festzustellen. Eine dieser Funktionen besteht darin, die Ausgangssteuersignale des Mikroprozessors zu überprüfen, um ihr Verhalten und ihre Folge festzustellen, wenn ein Befehl ausgeführt wird. Diese Signale, die eine Funktion des inneren Zustandes des Mikroprozessors sind, sind kennzeichnend für das richtige Arbeiten des Systems und können vom Prozessor nicht selbst beobachtet werden.

Zur Realisierung dieser Funktion wird ein linear rückgekoppeltes Schieberegister verwendet, das eine Signatur in Abhängigkeit der Folge von Steuersignalen erzeugt, die entstehen, wenn der Mikroprozessor einen Befehl ausführt. Diese erste Signatur wird anschließend mit einer zweiten Signatur verglichen, die einzigartig für jeden Operationscode ist. Die Anordnung überprüft so nicht nur die Richtigkeit der Steuersignale, sondern überprüft ebenso, daß der Mikroprozessor der richtigen Folge von internen Steuerzuständen folgt, wenn er einen Befehl ausführt. Die letztere Überprüfung hängt von der Art ab, in der die Steuersignale erzeugt werden, wenn ein Befehl ausgeführt wird.

Die Testanordnung nach Figur 2 enthält ein linear rückgekoppeltes Schieberegister 22, das eine Mehrheit von Steuersignalen vom Mikroprozessor sowie zwei Signale für das Eintakten von Daten und für das Initialisieren des Schieberegisters empfängt.

Das erste Signal wird auf der Leitung 30D zugeführt, um eine Taktimpulsfolge zum Abtasten der Steuersignale zu verschiedenen Zeitpunkten während zumindest einem Teil der Periode des Holens und des Ausführens eines Befehls anzulegen. Dieses erste Signal kann während der Schreib- oder Leseoperation unterbrochen werden, so daß die Anzahl der Abtastvorgänge nicht von der Zugriffszeit zum Speicher und/oder zum Ein/Ausgang eines peripheren Gerätes abhängt. Ein zweites Signal auf der Leitung 30B initialisiert das Schieberegister 22 zu Beginn eines Holzyklus; d.h. es setzt das Schieberegister 22 auf null oder auf eine andere vorgegebene Zahl.

Das linear rückgekoppelte Schieberegister 22 gibt die erste Signatur auf einer Mehrheit von Ausgangsleitungen 24 ab. Diese erste Signatur hängt vom Status und der zeitlichen Folge der Steuersignale ab, die auf den Eingangsleitungen 26 vorliegen.

Eines oder mehrere dieser Mikroprozessorsteuersignale werden einer Steuereinheit 28 zugeführt, die feststellt, wenn der Operationscode eines vom Mikroprozessor auszuführenden Befehls vom Computerspeicher geholt wird. Der Beginn dieses Holzyklus wird von der Steuereinheit 28 durch Ausgangssignale an zwei Ausgangsleitungen 30B und 30C angezeigt. Diese Signale werden zum linear rückgekoppelten Schieberegister 22 über die Leitung 30B und zu einem Fehlerspeicherflipflop 32 über die Leitung 30C übertragen. Ein drittes Ausgangssignal auf der Leitung 30A wird während des Holzyklus erzeugt, wenn der Operationscode auf dem Datenbus erscheint, um den Operationscode, der vom Datenbus über die Eingangsleitungen 36 empfangen wird, in einem Zwischenspeicher 34 festzuhalten.

Der Operationscode, der im Zwischenspeicher 34 gespeichert ist, wird über die Leitungen 38 einem kombinatorischen Schaltkreis zugeführt, der z.B. durch einen Festspeicher
(ROM) oder einer programmierbaren logischen Einheit (PLA)
40 realisiert sein kann. Weiterhin wird der Operationscode
einem Codedetektor 42 (in Wirklichkeit ein Teil der Steuereinheit 28) zugeführt, der bestimmte bedingte Operationscodes feststellt,    die anders behandelt werden müssen,
als die anderen Operationscodes. Der Codedetektor 42 erzeugt ein Signal, das über die Leitung 44 dem kombinatorischen Schaltkreis 40 zugeführt wird.

Die Signale auf der Leitung 38, ebenso wie das Signal auf
der Leitung 44, legt die Adresse fest, die dem ROM 40 angeboten wird. Im ROM 40 ist für jeden Operationscode eine
Zahl gespeichert oder eine zweite Signatur, die dem Wert
der ersten Signatur entspricht, der von dem linear rückgekoppelten Schieberegister 22 erzeugt wird,        wenn
der Mikroprozessor fehler-frei arbeitet. Diese zweite Signatur ist somit die Sollsignatur für einen bestimmten Operationscode.

Wenn somit der ROM 40 durch Signale auf den Leitungen 38
und 44 adressiert wird, erzeugt er die zweite Signatur auf
seinen Ausgangsleitungen 46 entsprechend dem bestimmten
Operationscode, der im Zwischenspeicher 34 gespeichert ist.
Die erste Signatur auf den Leitungen 24 und die zweite
Signatur auf den Leitungen 46 werden dem Komparator 48 zugeführt, der ein Signal auf seinen Ausgangsleitungen 50
erzeugt, wenn die zwei Signaturen gleich sind. Das digitale Signal auf der Leitung 50 wird in das Fehlerflipflop
32 zu Beginn des nächsten Holzyklus getaktet. Die Ausgangsleitung 52 des Fehlerflipflops 32 zeigt somit an, ob der
Mikroprozessor fehlerfrei arbeitet (erste und zweite Signatur sind gleich) oder ob ein Fehler (die Signaturen sind
verschieden) während des vorhergehenden Hol- und Ausführungszyklus auftritt.

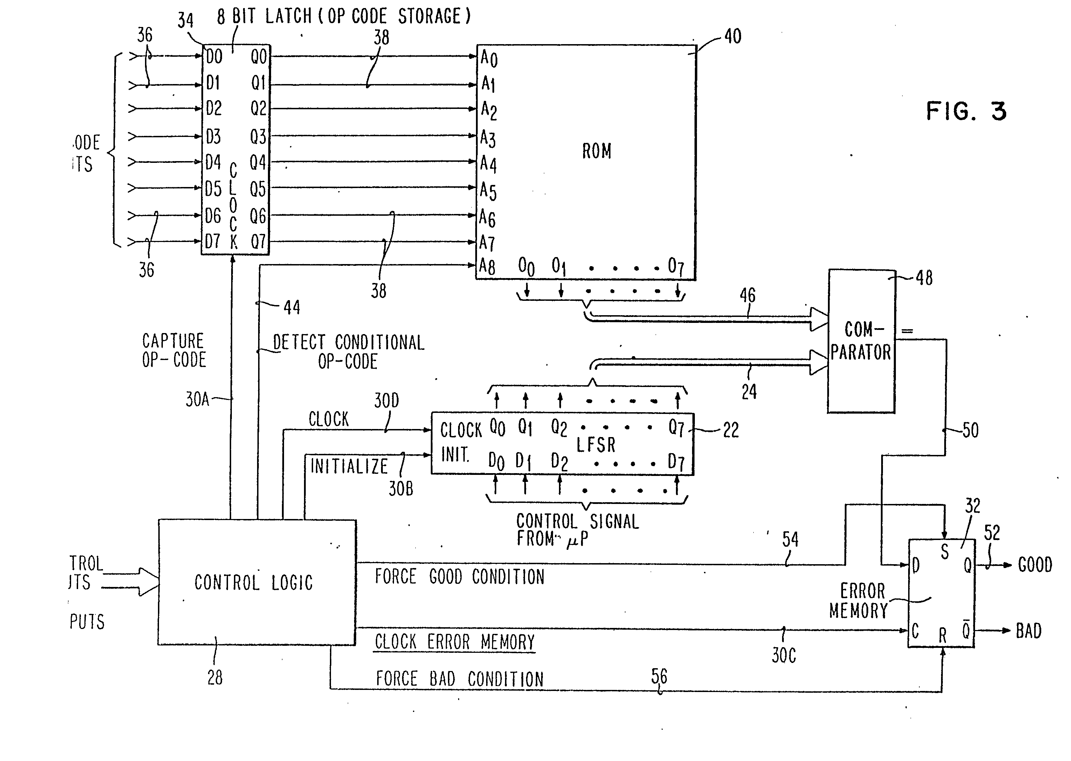

Die Anordnung der Figur 2 ist detaillierter in Figur 3 dargestellt. Die einzige zusätzliche Eigenschaft der Anordnung nach Figur 3 ist die Fähigkeit, das Fehlerflipflop 32 in einen ersten oder in einen zweiten Zustand durch Signale auf Leitungen 54 und 56 zu bringen, die dem Setz- oder Rücksetzeingang dieses Flipflops zugeführt werden. Diese Fähigkeit ist nützlich zum Selbsttest des Prüfprozessors 20.

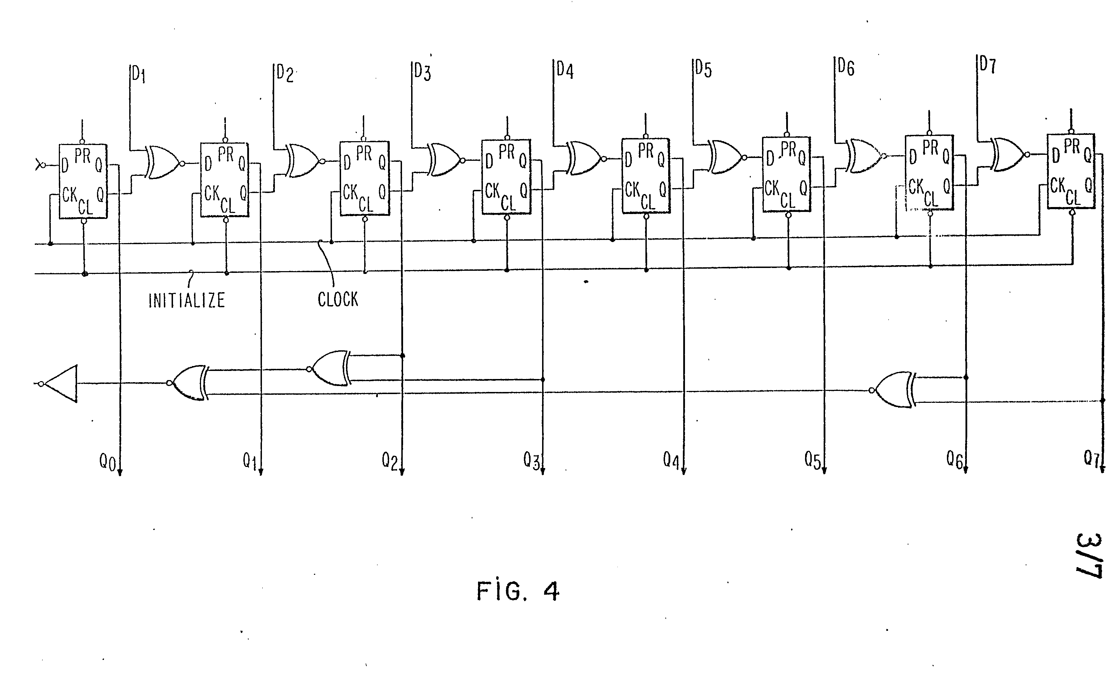

Wie oben bereits erwähnt worden ist, kann das linear rückgekoppelte Schieberegister 22 ein sog. eingebauter logischer Blockprüfer oder BILBO sein, wie er in dem US-Patent 4 340 857 beschrieben ist. Figur 4 zeigt ein speziell ausgeführtes Schieberegister, das acht Eingänge $D_0$, $D_1$, $D_2$... $D_7$ und acht Ausgänge $Q_0$, $Q_1$, $Q_2$... $Q_7$ sowie den vorher erwähnten Takt-und Initialisierungseingang aufweist. Dieser Schaltkreis erzeugt an den Ausgängen die Signatur, die von der genauen Reihenfolge abhängt, in welcher die Information an den Eingängen eingetroffen ist. Deshalb muß dieser Schaltkreis von anderen Schaltkreisen zur Datenkompression und zur Codeauswertung unterschieden werden, die nicht ein eindeutiges Ausgangssignal für einen eindeutigen Satz und Folge von Eingangssignalen erzeugen. Ein besonderer Vorteil des linear rückgekoppelten Schieberegisters ist darin zu sehen, daß es selbsttestend ist, da es mit einer vorgegebenen Anzahl von Takten getaktet werden kann, um eine Signatur zu erzeugen, die nur dann einen bestimmten Wert hat, wenn die Schaltung fehlerfrei ist.

Die Arbeitsweise des Verfahrens und der Anordnung wird im folgenden im Zusammenhang mit einem Mikroprozessor, nämlich dem Intel 8085 beschrieben. Dieser Mikroprozessor arbeitet u.a. mit den folgenden Steuersignalen:

CLK - Taktsignal

ALE - Freigabe des Adressenspeichers - markiert die
Zyklen der Prozessoroperation

$\overline{RD}$ - Lesen - zeigt an, wenn eine Information vom
Speicher gelesen werden soll

$\overline{WR}$ - Schreiben - gibt an, wenn eine Information in
den Speicher geschrieben werden soll

IO/M, S0

und S1 - Statussignale für Holen des Befehls, Unterbrechungsquittierung, Speicherlesen und Speicherschreiben usw..

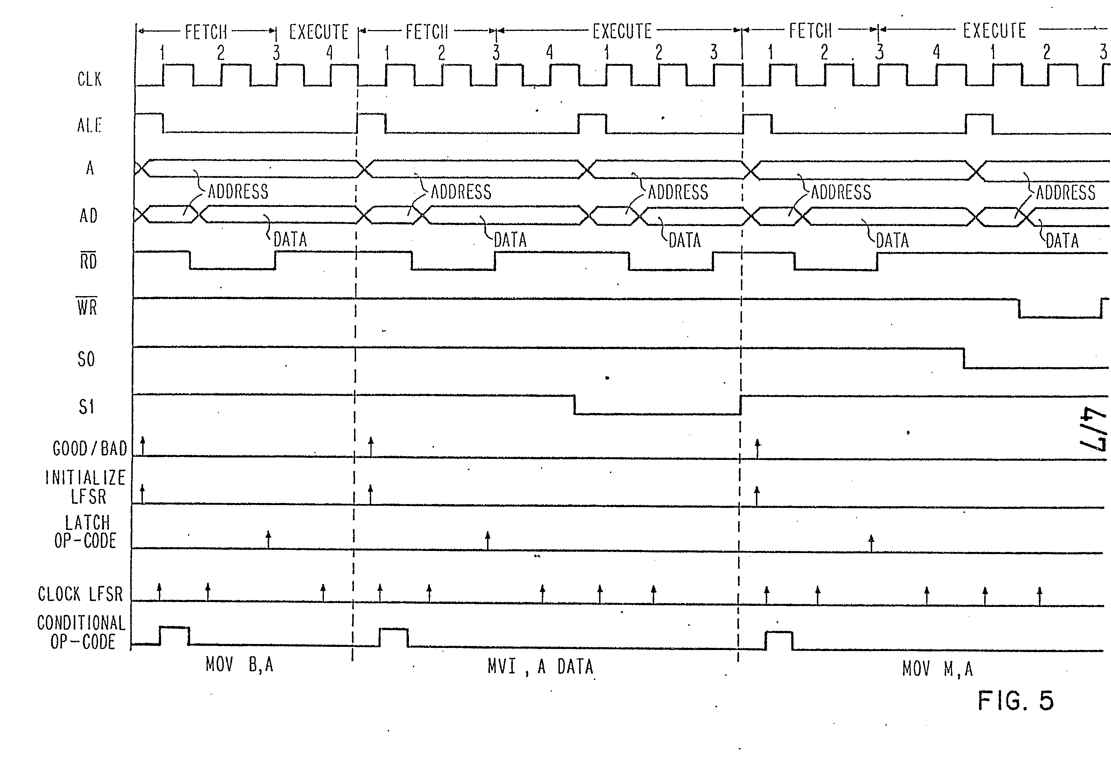

Figur 5 zeigt die sechs Steuersignale, die oben aufgelistet
worden sind, zusammen mit den Adreßbussignalen A und den
Datenbussignalen AD für drei verschiedene Befehle, die aus
dem Befehlsatz des 8085 Mikroprozessor ausgewählt worden
sind. Diese drei Befehle sind:

MOV B, A - Bewege den Inhalt des internen A Registers
zu dem internen B Register

MVI A, Data - Bewege Daten (die acht Bits der Daten, die
unmittelbar diesem acht Bitbefehl im Speicher folgen) zu dem internen A Register

MOV M, A - Bewege den Inhalt des internen A Registers
zur Speicherstelle M, wobei die Speicherstelle M durch das interne H und L Register festgelegt wird.

Der Start des Holzyklus für jeden Befehl beginnt mit einem
positiv ansteigenden ALE Impuls. Wie aus Figur 5 zu entnehmen ist, ist der Holzyklus beendet und der Mikroprozessor
beginnt die Ausführung des Befehls nach 2 1/2 Taktzyklen.
Die Adresseninformation wird sowohl auf den Adreßbus als
auch auf den Datenbus gelegt, wie es den Signalen A und AD
zu entnehmen ist. Die Adresseninformation erscheint auf dem
Datenbus für nur einen Taktzyklus; anschließend wird dieser

-12-

Bus dazu benutzt, um Daten von oder zum Mikroprozessor zu übertragen.

Wenn Daten aus dem Computerspeicher gelesen werden sollen, nimmt das Signal $\overline{RD}$ niederes Potential an und beginnt den Datentransfer. Wenn Information in den Computerspeicher geschrieben werden soll, nimmt das Signal $\overline{WR}$ niederes Potential an und veranlaßt damit den Datentransfer.

Die untere Hälfte der Figur 5 zeigt die ungefähren Zeiten, zu denen in der den Mikroprozessor prüfenden Anordnung Reaktionen auftreten. Die Steuereinheit 28 stellt zunächst fest, daß ein Befehl vom Speicher geholt werden soll und taktet das Flipflop 32 über die Leitung 30C. Sie startet weiterhin das linear rückgekoppelte Schieberegister 22 über die Leitung 30B und veranlaßt danach die Übernahme des Operationscodes in den Zwischenspeicher 34 über die Leitung 30A. Nachdem das Schieberegister gestartet worden ist, wird dieses durch die Taktimpulse CLK mit ansteigender Flanke getaktet, so daß die erste Signatur für die Steuersignale erzeugt wird, die während des Holens und Ausführens des laufenden Befehls auftreten. Während einer Lese- oder Schreiboperation kann das Taktsignal unterbrochen werden, so daß die Zahl der Taktimpulse nicht von der Speicherzugriffszeit abhängig ist.

Nachdem der Operationscode des laufenden auszuführenden Befehls in den Zwischenspeicher 34 eingespeichert worden ist, gibt der Zwischenspeicher an seinen Ausgängen Adressensignale zu den Eingängen $A_0$ - $A_7$ des ROM 40 ab. Wenn ein bedingter Operationscode festgestellt wird, wird gleichzeitig ein Signal an den ROM Adresseneingang $A_8$ angelegt. In Abhängigkeit von diesen Adresseneingängen gibt der ROM 40 eine zweite Signatur an seinen Ausgängen $O_0$ - $O_7$ ab, die über die Datenleitungen 46 dem Komparator 48 zuge-

führt wird. Nach der Ausführung des Hol- und Ausführungszyklus wird die erste Signatur ebenfalls dem Komparator 48 über die Datenleitungen 24 zugeführt. Der Komparator 48 erzeugt ein Signal auf der Leitung 50, wenn die zwei Signaturen gleich sind. Dieses Signal wird zu dem D Eingang des Fehlerspeicherflipflops 32 übertragen. Das Signal wird in das Flipflop 32 mit dem Empfang des nächsten Taktimpulses auf der Leitung 30C eingetaktet.

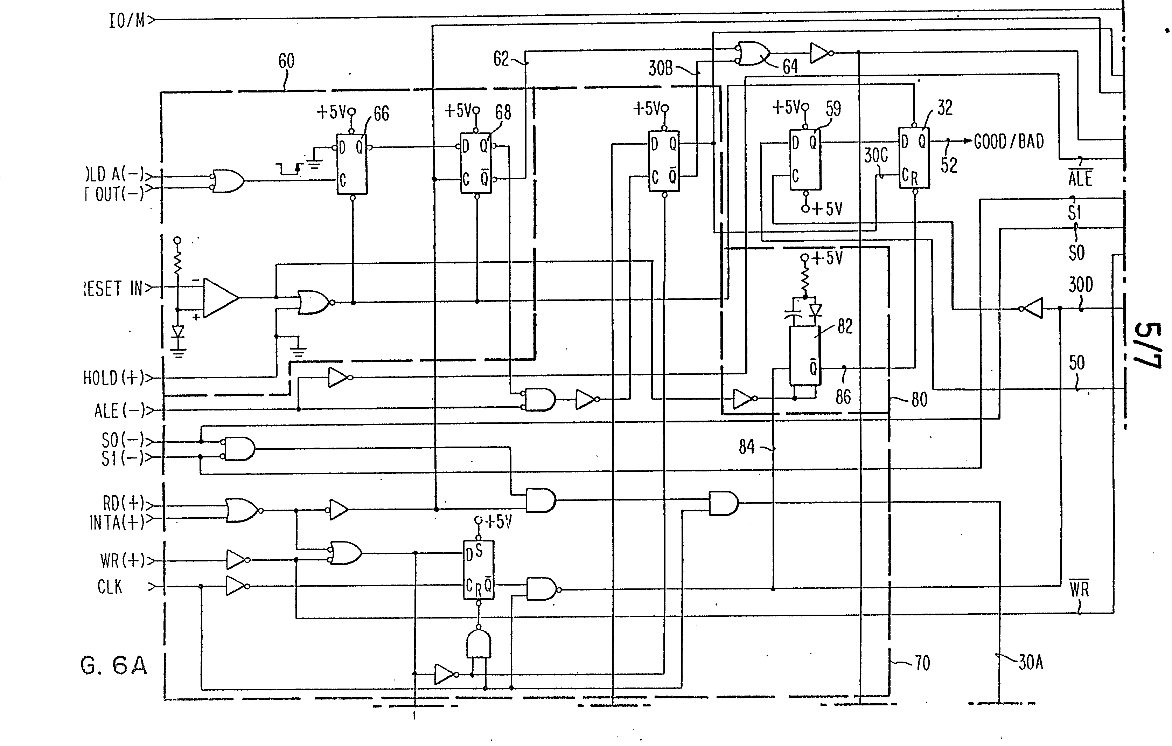

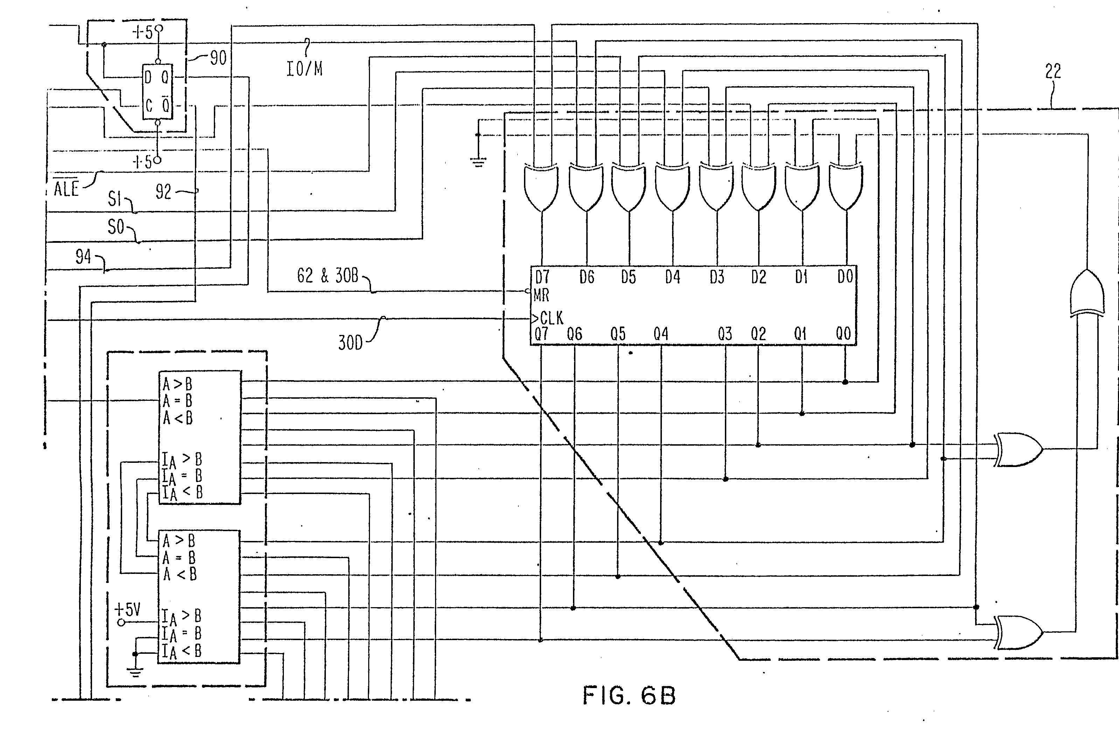

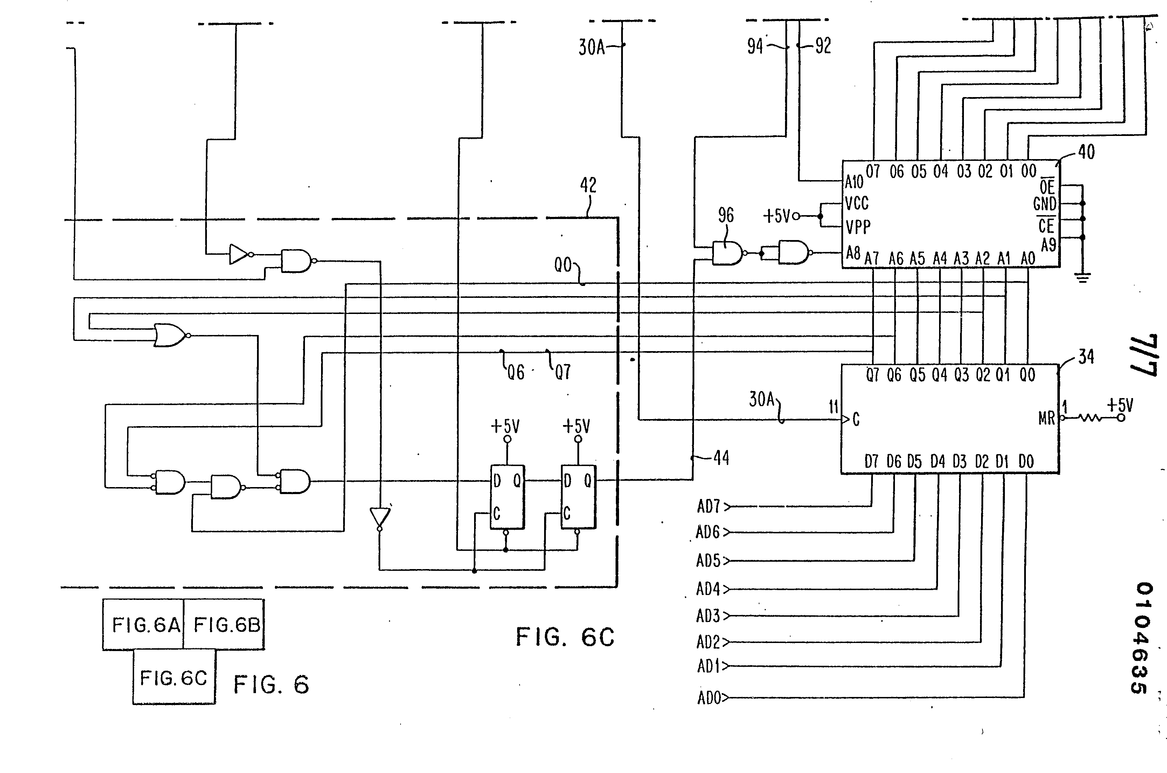

Figur 6 zeigt ein Ausführungsbeispiel einer Anordnung, mit der alle Steuersignale eines Intel 8085 Mikroprozessor geprüft werden können. Diese Signale sind IO/M (Eingang-Ausgang/Speicher), HOLD A (hold Quittierung), RESET OUT, RESET IN, HOLD, ALE (Adressenspeicherfreigabe), S0, S1, RD (Lesen), INTA (Unterbrechungsquittierung), WR (Schreiben) und CLK. Diese Signale werden der in Figur 6 gezeigten Steuereinheit zugeführt, die sie auswählend zu dem linear rückgekoppelten Schieberegister weiterleitet, das in Figur 6 mit dem Block 22 angegeben ist. Der Operationscode vom Computerspeicher wird über die Datenbusleitungen AD0 – AD7 empfangen und an den Zwischenspeicher 34 weitergeleitet. Der Ausgang des Zwischenspeichers ist mit dem ROM 40 verbunden; der Ausgang des ROM 40 ist seinerseits an den Komparator 48 angeschlossen. Der Komparator 48 erzeugt ein Signal auf der Ausgangsleitung 50, wenn die Ausgänge des Schieberegisters 22 und des ROMs 40 gleiche Signale haben. Dieses Signal wird zu dem Fehlerspeicher, der aus dem Pufferspeicherflipflop 59 und dem Fehlerspeicherflipflop 32 besteht, übertragen. Das Flipflop 32 erzeugt das Gut/Schlechtsignal am Ausgang 52.

Die übrigen Schaltkreise in Figur 6 umfassen die Steuereinheit für die Anordnung. Diese Steuereinheit umfaßt mehrere Abschnitte oder Blöcke, die jetzt beschrieben werden sollen:

Der Startschaltkreis (Block 60) enthält einen Schaltkreis, mit dem das Holen eines ersten Befehls festgestellt wird, der auf eine Reset- oder Hold-Operation des Mikroprozessors folgt. Dieser Schaltkreis erzeugt ein Ausgangssignal auf der Leitung 62, der über ein ODER Glied 64 zu dem Schieberegister 22 übertragen wird, um dieses in den gewünschten Ausgangszustand zu bringen. Der Startschaltkreis setzt ein Flipflop 66 nach einer Reset- oder Hold-Operation und der Ausgang dieses Flipflops wird in ein Ausgangsflipflop 68 getaktet, wenn der nächste oder erste Befehl geholt wird.

Mit Hilfe des Schaltkreises im Block 70 wird festgestellt, wenn ein Befehl geholt wird. Dieser Schaltkreis faßt die Signale ALE, S0, S1, RD, INTA, WR und CLK zusammen, um festzustellen, wenn der Mikroprozessor einen Befehl vom Speicher holt. Der Schaltkreis erzeugt die obengenannten Impulse auf den Ausgangsleitungen 30A, 30B, 30C und 30D zu Beginn jedes Befehlsholzyklus.

Die Steuereinheit enthält eine Zeitschaltung, dargestellt im Block 80, die aus einem wiedereinschaltbaren monostabilen Kippglied 82 besteht, die einen Impuls auf der Leitung 84 jedesmal dann erhält, wenn das linear rückgekoppelte Schieberegister 22 getaktet wird. Wenn aus irgendeinem Grund ein solcher Takt-Impuls nicht auftritt, bevor die monostabile Kippschaltung 82 ausläuft, sendet sie ein Signal auf der Leitung 86 zu dem Fehlerspeicherflipflop 32, um dieses Flipflop zurückzusetzen, wodurch ein Fehlersignal an dessen Ausgang erzeugt wird.

Der Schaltkreis, der im Block 42 gezeigt wird, stellt die Operationscodes der drei bedingten Verzweigungsbefehle fest: nämlich Jump, Call und Return. Er ist notwendig, um diese Befehle verschieden von den anderen Befehlen zu behandeln, weil das Schieberegister 22 eine von zwei Signaturen erzeugt in Abhängigkeit davon, ob die Bedingung erfüllt ist oder nicht. Wenn das Programm in der einen Richtung verzweigt, wird eine Signatur erzeugt, wenn das Programm in der anderen Richtung verzweigt, wird eine andere Signatur generiert. Der Schaltkreis 42 ist erforderlich, um zwischen einer von zwei Adressen im ROM 40 für jeden bedingten Befehl auszuwählen, in Abhängigkeit von 1) dem Vorhandensein eines bedingten Verzweigungsbefehls und 2) von der Erfüllung der Bedingung, die der Prozessor festgelegt hat. Diese Bedingung kann der Anzahl der Speicherleseoder Speicherschreibzyklen entnommen werden, die auf eine Holzyklus folgen. Der Schaltkreis 42 erzeugt so ein Signal auf der Leitung 44, um den Eingang A8 des ROM 40 zu adressieren, so daß eine bestimmte Gruppe von 8 bit Adressen, die an den Eingängen A0 - A7 anliegt, ausgewählt wird.

Die Steuereinheit in Figur 6 umfaßt weiterhin einen Block 90, der die Quittierung einer Unterbrechungsbedingung durch den Mikroprozessor feststellt. Im Falle einer Unterbrechung weist das Steuersignal IO/M den entgegengesetzten Zustand auf als bei einem normalen Holzyklus. Wenn eine Unterbrechung festgestellt wird, wird auf der Ausgangsleitung 92 ein Signal erzeugt, das zu dem Adresseneingang A10 des ROM 40 übertragen wird, um einen anderen Bereich der Signaturen auszuwählen, die von den Adressen A0 - A7 adressiert werden. Dies veranlaßt den ROM eine bestimmte Signatur zu erzeugen, die mit der übereinstimmt, die von dem Schieberegister 22 während des Unterbrechungszyklus des Mikroprozessors erzeugt worden ist. Im anderen Fall wird ein Signal auf der Leitung 94 übertragen, um das UND Glied 96 zu öffnen und dadurch dem Signal auf der Leitung 44 den Zugang zum ROM Eingang A8 zu ermöglichen.

Patentansprüche

1. Verfahren zur Prüfung eines digitalen Rechners, der einen Prozessor zur Ausführung von Befehlen und einen mit dem Prozessor verbundenen Speicher zur Speicherung der vom Prozessor auszuführenden Befehlen aufweist, bei dem die Befehle aus einem vorgegebenen Satz von Befehlen ausgewählt werden und jeder Befehl einen bestimmten Operationscode aufweist, und bei dem der Prozessor auf Steuersignalausgängen Steuersignale beim Holen und/oder Ausführen jedes Befehles abgibt, dadurch g e k e n n z e i c h n e t , daß festgestellt wird, wenn ein Operationscode eines vom Prozessor auszuführenden Befehls vom Speicher geholt wird, daß die Steuersignale überprüft werden, die an den Steuersignalausgängen während des Holens und/oder Ausführens des Befehls abgegeben werden, daß eine erste Signatur in Abhängigkeit dieser Steuersignale erzeugt wird, wobei jedem Satz von Steuersignalen eine bestimmte erste Signatur zugeordnet ist, daß der Operationscode des von dem Prozessor auszuführenden Befehls übernommen wird und eine zweite Signatur in Abhängigkeit davon erzeugt wird, wobei diese zweite Signatur derjenigen ersten Signatur entspricht, die bei fehlerfreier Arbeitsweise des Prozessors erzeugt wird, und daß die erste und zweite Signatur miteinander verglichen wird und ein Ausgangssignal erzeugt wird, das einen Fehler anzeigt, wenn die beiden Signaturen ungleich sind.

2. Verfahren nach Anspruch 1, dadurch g e k e n n - z e i c h n e t , daß die Steuersignale zumindest während eines Teils des Hol- und Ausführungszyklus des Befehls ausgewertet werden, die Steuersignale zu einer Mehrzahl von Zeitpunkten während des Zyklus abgetastet werden, und daß die erste Signatur in Abhängigkeit der Zustände der Steuersignale zu der Mehrzahl von Zeitpunkten erzeugt wird.

3. Verfahren nach Anspruch 2, dadurch g e k e n n - z e i c h n e t , daß der Rechner weiterhin einen Taktgenerator zur Erzeugung eines Taktsignals enthält, und daß die Steuersignale synchron mit diesen Taktsignalen abgetastet werden.

4. Verfahren nach Anspruch 3, dadurch g e k e n n - z e i c h n e t , daß die Steuersignale zu einer vorgegebenen Anzahl von Zeitpunkten bei jedem Taktzyklus abgetastet werden, es sei denn, die Anzahl der Abtastzeiten ist immer die gleiche während der Lese- oder Schreiboperation und unabhängig von der Länge der Zeit, die eine derartige Lese- oder Schreiboperation erfordert.

5. Verfahren nach einem der vorhergehenden Ansprüche, dadurch g e k e n n z e i c h n e t , daß die Prüfschritte in einer eingebauten Prüfanordnung durchgeführt werden.

6. Verfahren nach einem der vorhergehenden Ansprüche, dadurch g e k e n n z e i c h n e t , daß aus dem Operationscode entnommen wird, ob ein bedingter Verzweigungsbefehl von dem Prozessor auszuführen ist und wenn ein bedingter Verzweigungsbefehl auszuführen ist, eine von zumindest zwei möglichen zweiten Signaturen ausgewählt und erzeugt wird , je nachdem ob die Bedingung erfüllt ist oder nicht.

7. Verfahren nach einem der vorhergehenden Ansprüche, dadurch g e k e n n z e i c h n e t , daß das Ausgangssignal in einen vorgegebenen Zustand gebracht wird, um die Arbeitsweise des Testverfahrens zu prüfen.

8. Verfahren nach einem der vorhergehenden Ansprüche, dadurch g e k e n n z e i c h n e t , daß das Ausgangs-

signal in einen vorgegebenen Zustand gebracht wird, wenn festgestellt wird, daß der erste Befehl geholt wird, nachdem der Prozessor im Ruhezustand war.

9. Verfahren nach einem der vorhergehenden Ansprüche, dadurch g e k e n n z e i c h n e t , daß die Zeit zwischen aufeinanderfolgenden Zugriffen zu Befehlen überwacht wird und das Ausgangssignal in den Fehler anzeigenden Zustand gebracht wird, wenn die Zeit eine vorgegebene maximale Zeit überschreitet.

10. Verfahren nach einem der vorhergehenden Ansprüche, dadurch g e k e n n z e i c h n e t , daß die Quittierung einer Unterbrechungsbedingung durch den Prozessor festgestellt wird und wenn eine derartige Unterbrechungsquittierungsbedingung festgestellt worden ist, eine zweite Signatur ausgewählt wird, die der ersten Signatur entspricht, die durch die Steuersignale während des Unterbrechungsquittierungszyklus des Mikroprozessors erzeugt wird.

11. Anordnung zur Durchführung des Verfahrens nach einem der vorhergehenden Ansprüche zum Prüfen eines digitalen Rechners, der einen Prozessor zur Ausführung von Befehlen und einen mit dem Prozessor verbundenen Speicher zur Speicherung der vom Prozessor auszuführenden Befehlen aufweist, bei dem die Befehle aus einem vorgegebenen Satz von Befehlen ausgewählt werden und jeder Befehl durch einen einzigen Operationscode definiert ist und bei dem der Prozessor auf Steuersignalausgängen Steuersignale beim Holen und/oder Ausführen jedes Befehls abgibt, dadurch g e - k e n n z e i c h n e t , daß eine Steuereinheit (28) vorgesehen ist, die feststellt, wenn ein Operationscode eines vom Prozessor (10) auszuführenden Befehls vom Speicher (12) geholt wird, daß eine erste Schaltung (22) vorgesehen ist, die mit den Steuersignalausgängen (26) verbunden ist und gesteuert von der Steuereinheit (28) eine erste Signatur in Abhängigkeit der Steuersignale erzeugt, wobei eine bestimmte erste Signatur jedem bestimmten Satz von Steuersignalen entspricht, daß eine zweite Schaltung (40) vorgesehen ist, die mit dem Speicher verbunden ist und gesteuert von der Steuereinheit (28), eine zweite Signatur in Abhängigkeit des Operationscodes des von dem Prozessor auszuführenden Befehls erzeugt, wobei die zweite Signatur derjenigen ersten Signatur entspricht, die bei fehlerfreier Arbeitsweise des Prozessors erzeugt wird, und daß eine dritte Schaltung (48) vorgesehen ist, die mit der ersten und zweiten Schaltung verbunden ist, um die erste und zweite Signatur miteinander zu vergleichen und um ein Ausgangssignal abzugeben, das einen Fehler anzeigt, wenn die beiden Signaturen ungleich sind.

12. Anordnung nach Anspruch 11, dadurch g e k e n n - z e i c h n e t , daß die erste Schaltung (22) Mittel zum wiederholten Abtasten der Steuersignale zu verschiedenen Zeitpunkten enthält, um die erste Signatur in Abhängigkeit der Zustände der Steuersignale zu den Zeitpunkten zu erzeugen.

13. Anordnung nach Anspruch 12, dadurch g e k e n n - z e i c h n e t , daß der digitale Rechner ein Taktsignalgenerator zum Erzeugen von Taktsignalen (CLK) aufweist und daß die Abtastung der Steuersignale synchron mit den Taktsignalen erfolgt.

14. Anordnung nach einem der Ansprüche 11 bis 13, dadurch g e k e n n z e i c h n e t , daß die erste Schaltung (22) eingebaut ist.

15. Anordnung nach einem der Ansprüche 11 bis 14, dadurch g e k e n n z e i c h n e t , daß die zweite Schaltung(40) eine kombinatorische Schaltung zur Speicherung einer Mehrzahl von zweiten Signaturen aufweist.

16. Anordnung nach Anspruch 15, dadurch  g e k e n n  -
z e i c h n e t  , daß die kombinatorische Schaltung ein
Festspeicher ist.

17. Anordnung nach Anspruch 15 oder 16, dadurch  g e  -
k e n n z e i c h n e t  , daß die zweite Schaltung Decodiermittel (42) enthält, die mit dem Speicher (12) verbunden sind und von der Steuereinheit (28) gesteuert werden
und die aus dem Operationscode feststellt, ob ein bedingter
Verzweigungsbefehl vom Prozessor auszuführen ist, daß die
zweite Schaltung weiterhin logische Schaltkreise enthält,
die mit den Decodiermitteln verbunden sind, um eine von
zumindest zwei möglichen zweiten Signaturen auszuwählen
und zwar in Abhängigkeit davon, ob die Bedingung erfüllt
ist oder nicht.

18. Anordnung nach einem der Ansprüche 11-17, dadurch
g e k e n n z e i c h n e t  , daß ein Startschaltkreis
(60) vorgesehen ist, der beim Zugriff zu einem ersten Befehl ein Signal erzeugt, durch das die erste Schaltung (22)
in ihren Ausgangszustand gebracht wird.

19. Anordnung nach einem der Ansprüche 11-18, dadurch
g e k e n n z e i c h n e t  ,d aß eine Zeitschaltung
(80) vorgesehen ist, die überprüft, ob die Zeit zwischen
Zugriffen zu aufeinanderfolgende Befehle eine vorgegebene
Zeit  überschreitet und für diesen Fall das Fehlerflipflop (32) setzt.

20. Anordnung nach einem der Ansprüche 11-19, dadurch
g e k e n n z e i c h n e t  , daß ein Schaltkreis (90)
vorgesehen ist, der die Quittierung einer Unterbrechungsanforderung durch den Prozessor (10) feststellt, und für diesen Fall eine zweite Signatur in der zweiten Schaltung (40) auswählt, die der ersten Signatur entspricht, die die erste Schaltung (22) mit Hilfe der Steuersignale während des Unterbrechungszyklus erzeugt.

0104635

1/7

FIG. 1

FIG. 2

FIG. 3

FIG. 4

FIG. 5

FIG. 6A

FIG. 6B

0104635

FIG. 6C

FIG. 6

| FIG.6A | FIG.6B |
|--------|--------|
| FIG.6C | |